(19)

Europäisches
Patentamt
European
Patent Office
Office européen
des brevets

(11) **EP 2 410 647 A2**

(12) **EUROPEAN PATENT APPLICATION**

(43) Date of publication:
    **25.01.2012 Bulletin 2012/04**

(51) Int Cl.:
    ***H02M 3/00*** (2006.01)        ***H05B 33/08*** (2006.01)

(21) Application number: **11174575.8**

(22) Date of filing: **19.07.2011**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**

(30) Priority: **20.07.2010 GB 1012163**

(71) Applicant: **Oxley Developments Company Limited
    Ulverston
    Cumbria LA12 9QG (GB)**

(72) Inventors:
    • **Pawel, Kasperek
      41-814 Zabrze (PL)**
    • **Jordan. Mark
      Ulverston
      Cumbria, LA 12 9QG (GB)**

(74) Representative: **W.P. Thompson & Co.
    Coopers Building
    Church Street
    Liverpool, Merseyside L1 3AB (GB)**

(54) **Switched mode power supply and method of control thereof**

(57)    The invention concerns a method of controlling a switch in a switched mode power supply, and also a switched mode power supply as such. In one embodiment the supply is driven from an alternating current source. It provides a controlled output which may in principle be bucked or boosted. A switching frequency is controlled by monitoring current in the switched mode power supply and initiating a new switching cycle each time the monitored current falls below a switching threshold, which is variable. The switch is turned ON during each switching cycle for a chosen ON time. The switching threshold is determined based upon the instantaneous supply voltage, Output power is monitored and the ON time is varied to adjust the power output toward a required value.

FIG.3.

**Description**

The present invention relates generally to a method of controlling a switched mode power supply and to a switched mode power supply as such. More specifically the invention relates to a lighting device using such a power supply.

The invention has been developed to address a requirement for a power supply unit ("PSU") to drive a lamp which uses light emitting diodes (LEDs) and will be discussed in that context, but it should be borne in mind that the supply unit and the method of control thereof that will be described herein could be used to drive other devices.

LED lamps often require DC drive at a voltage different from that of the mains electricity (or other electrical source) by which the lamp is driven. For example a mains voltage of 110V or 240V is typically too large for driving of an LED lamp unless individual LEDs are arranged in long series LED chains. Typically therefore it is necessary to reduce the supply voltage, and while (with an AC supply) this may be done using a transformer and rectifier, it is also known to use a converter such as a buck converter. A buck converter is a step-down DC to DC voltage converter based on a switched mode power supply.

There are several technical challenges to be addressed in this context.

One of these challenges concerns power factor. It is desirable that an electrical load (such as an LED lamp) driven from an AC supply should behave as if it is purely resistive, in that the current drawn by the load varies in phase with and in proportion to the supply voltage. Components which store energy and then return it, such as capacitors and inductors, can change the phase and/or shape of the current waveform drawn from the source in an undesirable manner and these undesirable effects are quantified by the load's power factor, defined as the ratio of (1) real power drawn by the load to (2) apparent power, which is the product of the load's voltage and current. A purely resistive load has a perfect power factor of 1. Loads with low power factor are undesirable because they add to the peak current in the distribution system and so increase losses therein (which vary as $I^2R$) and require larger power supply conductors and related equipment. Much electrical equipment, especially loads which are to be connected to commercial supplies such as the mains grid, are subject to stringent legal regulation with regard to power factor for this reason.

Another challenge concerns device longevity. LEDs potentially have a very long lifetime. Known buck converters typically incorporate electrolytic capacitors for smoothing purposes whose lifetime is expected to be shorter. It would be desirable to provide a power supply with a design lifetime commensurate with that of the LEDs.

Requirements for electromagnetic compatibility (EMC) create another set of technical challenges.

Switched mode power supplies potentially create electromagnetic interference (EMI) which may require suppression, and it would be desirable to provide a power supply which inherently creates low EMI.

Still another challenge can be created where supply voltage is variable, or the device is required to be operable by both AC and DC supplies.

In accordance with a first aspect of the present invention, there is a method of controlling a switch in a switched mode power supply driven from an alternating current source and providing a controlled output, the method comprising

(a) controlling a switching frequency by monitoring current in the switched mode power supply and initiating a new switching cycle each time the monitored current falls below a variable switching threshold;

(b) turning the switch ON during each switching cycle for a chosen ON time;

(c) setting the switching threshold based on the instantaneous supply voltage; and

(d) monitoring power output from the switched mode power supply and varying the ON time to adjust the power output toward a required value.

Preferably the switched mode power supply comprises a first inductor in series with a supply output terminal and the switching element is connected in series with the first inductor.

Preferably the switched mode power supply further comprises a second inductor connected across the switching element via a capacitance.

Preferably the first and second inductors are coupled.

Preferably the first and second inductors are wound on a common core.

Preferably the switched mode power supply further comprises a trimming inductor which is separate from the coupled first and second inductors.

Preferably the switched mode power supply is a single ended primary inductor converter.

Preferably the switching threshold is a function of instantaneous supply voltage.

Preferably the switching threshold is calculated by multiplying the instantaneous supply voltage by a predetermined number.

Preferably ON time is adjusted in a feedback loop based on comparison of output power with a required power.

Preferably the switched mode power supply drives at least one light emitting diode.

In accordance with a second aspect of the present invention, there is a switched mode power supply adapted to be driven from an alternating current source and to provide a controlled output, power supply comprising a switching element and a controller which controls switching of the switching element, causing it to switch at a switching frequency and a current sensor arranged to supply to the controller a signal representing current in the switched mode power supply, the controller being adapted to

(a) control the switching frequency by initiating a new switching cycle each time the said current in the switched mode power supply falls below a variable switching threshold;

(b) turn the switch ON during each switching cycle for an ON time determined by the controller;

(c) set the switching threshold based on the instantaneous supply voltage; and

(d) monitor power output from the switched mode power supply and varying the ON time to adjust the power output toward a required value.

Preferably the switched mode power supply comprises a first inductor in series with a supply output terminal and the switching element is connected in series with the first inductor.

Preferably the switched mode power supply further comprises a second inductor connected across the switching element via a capacitance.

Preferably the first and second inductors are coupled.

Preferably the first and second inductors are wound on a common core.

Preferably the switched mode power supply further comprises a trimming inductor which is separate from the coupled first and second inductors. Preferably the switched mode power supply is a single ended primary inductor converter.

Preferably the controller calculates the switching threshold as a function or LUT of instantaneous supply voltage.

Preferably the controller calculates the switching threshold by multiplying the instantaneous supply voltage by a predetermined number.

Preferably the controller adjusts ON time in a feedback loop based on comparison of output power with a required power.

Preferably the DC output is connected to at least one light emitting diode.

Preferably the controller is a programmed digital device.

Preferably the switched mode power supply is further adapted to be driven from a DC source, the controller being adapted to choose between an AC and a DC operating mode and to control the switching element in the DC operating mode to provide a fixed switching frequency and a duty cycle which is variable to control current in the switched mode power supply.

Preferably, when the switched mode power supply is in the DC operating mode, ON time of the switching element during each switching cycle is controlled by turning the switching element OFF when the measured current exceeds a threshold current value.

Preferably the controller is adapted to adjust the threshold current value to cause the power supply to output a required power in DC operating mode.

Preferably the power supply's output is direct current (DC).

A specific embodiment of the present invention will now be described, by way of example only, with reference to the accompanying drawings, in which:

Figure 1 is a simplified diagram of a single ended primary inductor converter (SEPIC) suitable for use in implementing the present invention;

Figure 2 is a diagram of a SEPIC configured according to the present invention;

Figure 3 is a graph of input current to a SEPIC driven in the boundary condition;

Figures 4a and 4b are graphs of output current and switch state for a SEPIC driven, in an uncontrolled manner, in a "continuous drive" condition;

Figures 5a and 5b are graphs of output current and switch state for a SEPIC driven in a "continuous drive" condition which is controlled in accordance with the present invention;

Figure 6 is a graph of experimental data from a SEPIC controlled in accordance with the present invention, showing current variation over time;

Figure 7 is a circuit diagram showing part of a SEPIC circuit constructed according to the present invention;

Figure 8 contains graphs of current, programmed duty cycle and actual duty cycle of a SEPIC receiving a DC supply and controlled in accordance with an aspect of the present invention;

Figure 9 is a graph of a SEPIC's voltage boost, showing how it varies with switching duty cycle; and

Figure 10 illustrates blanking of a portion of a measured current signal to avoid the effects of switching noise.

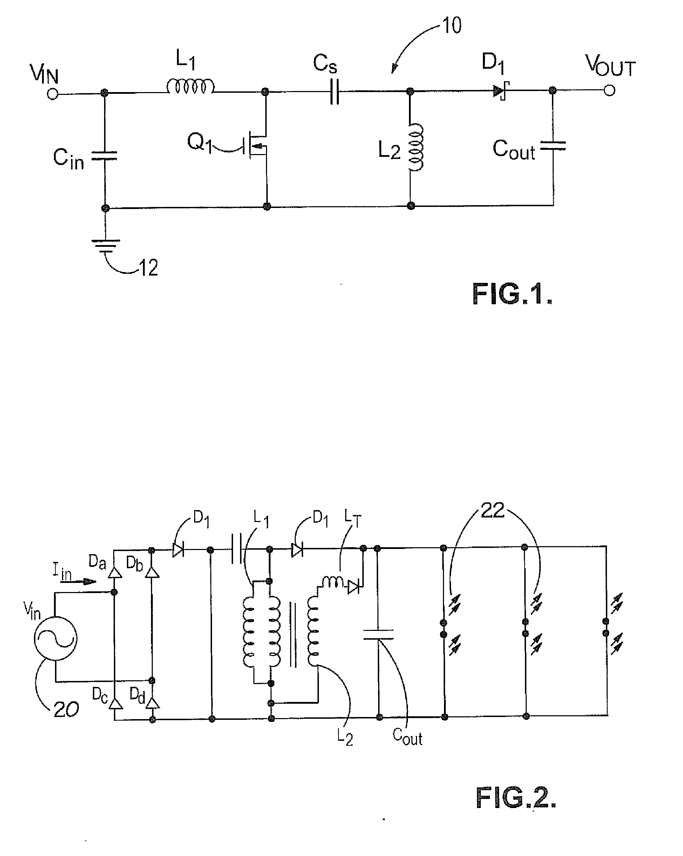

The present embodiment utilises a switched mode power supply in the form of a SEPIC (single ended primary inductor converter) to convert an AC supply voltage, e.g. from a mains supply, to a DC voltage suitable for driving an LED lamp. The construction and operation of a SEPIC are in themselves well known to the skilled person, but an example of a SEPIC 10 is represented in Figure 1. A rectified AC supply voltage is applied across $V_{IN}$ and earth 12. Input capacitor $C_{IN}$ is connected across the supply terminals. A route from the supply input $V_{IN}$ to the SEPIC output $V_{OUT}$ is formed through a series combination of a first inductor $L_1$, a series capacitor $C_5$ and a diode $D_1$. A switching element $Q_1$ is connected between earth 12 and a point between first inductor $L_1$ and series capacitor $C_s$. A second inductor $L_2$ is connected between earth and a point between series capacitor $C_s$ and diode $D_1$. An output capacitor $C_{OUT}$ is connected between the output $V_{OUT}$ and earth.

The switching element $Q_1$ is typically a transistor, and more particularly a field effect transistor (FET) such as a MOSFET. The SEPIC 10 exchanges power between the capacitors and inductors under the control of the switching element $Q_1$, and in so doing serves to convert its input voltage to a different DC output voltage. The switching element 10 is switched ON and OFF at high frequency and the frequency and duty cycle of the switching control the output of the SEPIC 10. The SEPIC 10 can, under control of switching element $Q_1$, either boost (increase) voltage or buck (decrease) it.

Figure 2 shows a SEPIC circuit suitable for implementing the present invention which is similar to that of Figure 1 except in that:-

    i. it additionally comprises diodes $D_a$, $D_b$, $D_c$ and $D_d$ connected to AC supply 20 in a rectifier configuration to supply un-smoothed DC to the SEPIC 10;

    ii. the inductors $L_1$ and $L_2$ may be coupled in the form of a transformer;

    iii. a trim inductor $L_T$ is connected in series with the second inductor $L_2$; and

    iv. a load is shown in the form of a set of LEDs 22, or strings of LEDs, connected in parallel with one another across the SEPIC output.

The significance of items ii and iii will be explained below.

Control of the switching element $Q_1$ is crucial to the circuit's performance. The apparatus described herein is capable of operating with an AC or a DC supply and switching element $Q_1$ is controlled in different modes depending on whether the supply is direct or alternating current. The manner of operation using an AC supply will be described first of all.

Control is carried out with two principal objectives. Firstly current drawn by the power supply is to vary in phase and in sympathy with the AC supply waveform, to provide a high power factor. Secondly average power (e.g. over an AC cycle) is to be controlled to ensure that the LEDs are driven at an appropriate power level.

In principle, a SEPIC can be driven in any of three modes:

    (a) discontinuous mode, in which current through the diode $D_1$ is intermittent;

    (b) continuous mode, in which current through the diode $D_1$ never falls to zero; and

    (c) the boundary condition, in which current falls to zero only for a negligible time, at which point the switching element $Q_1$ is turned ON to increase current.

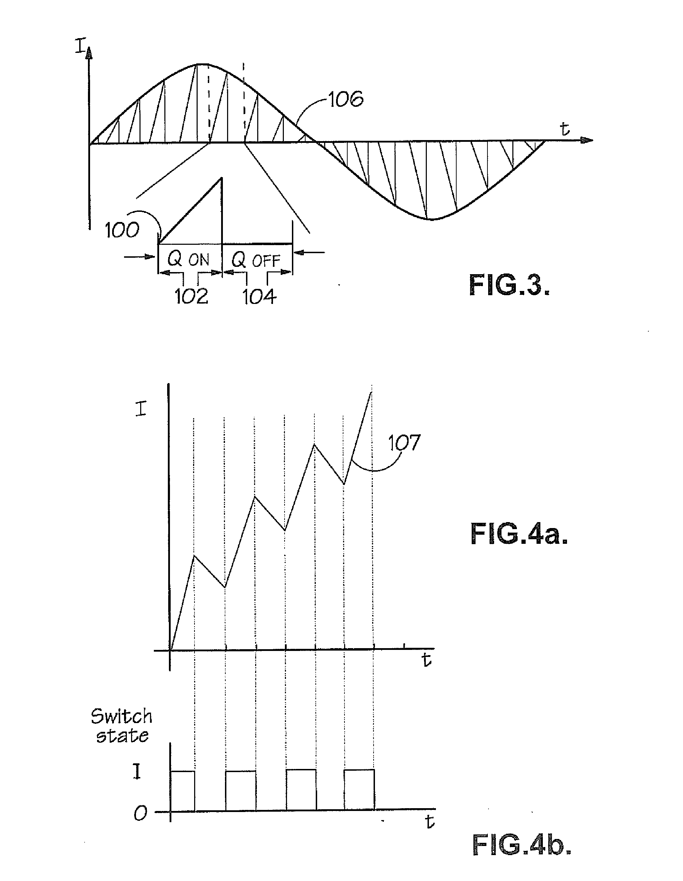

To operate the SEPIC in the boundary condition, current in diode $D_1$ is monitored every switching cycle and switching of the element $Q_1$ is controlled in dependence on the monitored current, $Q_1$ being turned ON when zero current is detected. Switching frequency is thus variable and dependent upon supply voltage, varying throughout the AC supply cycle, since the time taken for the current to fall to zero depends on the energy stored in the inductor which varies with supply voltage. The monitored current is used to control the point at which the switching element $Q_1$ is turned ON but not its ON time. If ON time in each switching cycle is fixed then the SEPIC will automatically draw more current and power when the AC supply voltage is high. This is because current increases more rapidly in the SEPIC's inductor $L_1$ at higher voltage, thus reaching a higher level during the (fixed) ON time. Figure 3 is a graph of input current in such a system and includes an inset portion indicating for one switching cycle the point in time 100 at which switching element $Q_1$ is switched "ON", the fixed period 102 for which it remains ON and the variable period 104 in which it is switched off as the diode current (not shown) falls to zero. The envelope 106 of current peaks is seen to form a sine wave and this varies in phase with supply voltage, providing a good power factor.

Unfortunately this known technique is only able to provide power factor correction when the supply has no capacitance at its input. To comply with requirements for electromagnetic compatibility ("EMC"), some filtering is required at the input. The necessary capacitance would impair power factor correction by drawing current on the rising slope of the AC waveform and discharging on the falling slope, providing an undesirable phase difference between voltage supplied and current drawn.

Consider then the alternative of operating the SEPIC in continuous mode at fixed frequency. This is problematic because the ON time of the switching element needs to be very closely monitored with a very high update rate to prevent the SEPIC from going out of control. Figures 4a and 4b illustrate the problem - diode Current 107 escalates in a rapid and potentially uncontrolled manner.

The solution, according to the present invention, involves actively driving the SEPIC instead of maintaining it constantly in the boundary condition.

This is achieved by:-

i. initiating each switching cycle of the switching element $Q_1$ when SEPIC current falls to a switching threshold (which, in contrast to the known boundary condition approach, is normally non-zero);

ii. controlling the switching threshold in dependence on supply voltage; and

iii. controlling ON time during the switching cycle to modulate the power provided by the power supply unit.

According to this approach, and as in the "boundary" technique, the ON time of the switching element $Q_1$ controls average power over the AC cycle. Adjustment of the ON time to modulate the power is carried out relatively slowly, over a period of one AC cycle, so that ON time is constant throughout the AC supply cycle. Control of ON time is, in the present embodiment, carried out using a feedback loop comparing actual and required output powers and adjusting ON time based on the comparison. A PID (proportioned integral differential) controller may for example be used.

Adjustment of the switching threshold is carried out much more quickly. Specifically, in the present embodiment, it is determined in real time by measuring supply voltage and multiplying it by a constant. The adjustment is based on an instantaneous measurement of supply voltage - that is, a measure of the supply voltage at any given instant, and not merely of the amplitude of the supply's AC waveform.

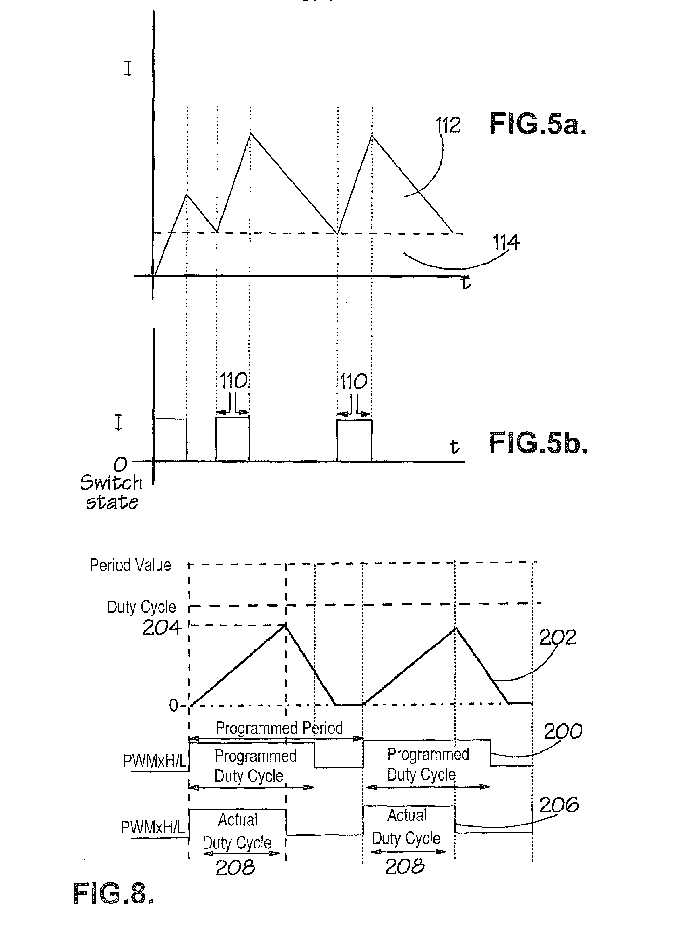

Figures 5a and 5b illustrate the operation of a supply unit embodying the invention. Switching element $Q_1$ is ON during intervals 110 whose duration is essentially constant through the AC supply cycle. Each ON interval is initiated when diode current 112 falls to a switching threshold 114, so that the frequency of the switching cycle is variable, as seen. Variation of the switching threshold 114 is not apparent in this drawing.

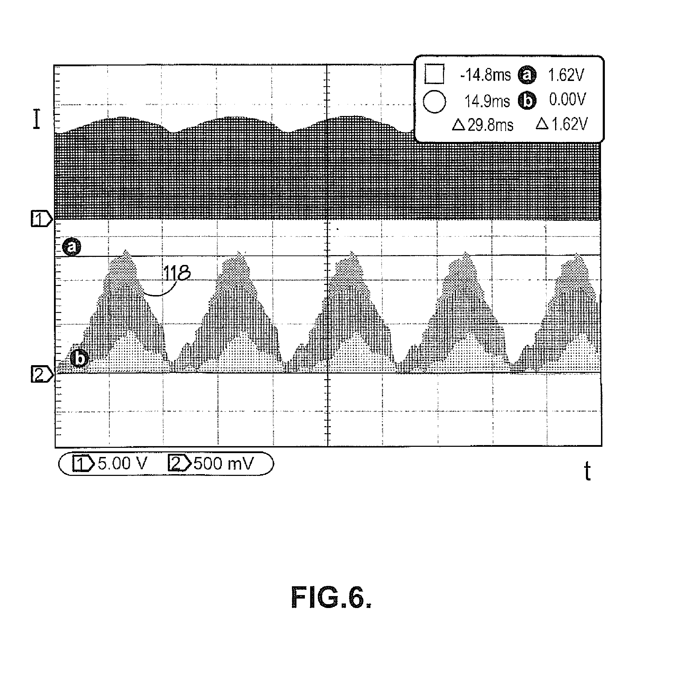

Figure 6 shows experimental data. SEPIC diode current (through the diode D1) is on the vertical axis and time on the horizontal axis. The period shown includes several AC supply cycles. Because the SEPIC switching cycle has a frequency much greater than that of the AC the supply, the line representing current appears as a band 118 which varies in phase with the AC supply and whose variation is broadly a sine wave.

In contrast to a fixed frequency solution (Figure 4), the present approach is safe against runaway current because the next switching cycle cannot commence until SEPIC diode current has fallen to a controlled level. Unlike the fixed frequency system, the control system does not require a very high update rate. In tests, updating the switching threshold every 0.5 ms has been shown to give satisfactory results with a 50HZ supply.

Compared with the approach in which the SEPIC is maintained in the boundary condition, the present control method offers improved EMC performance. Consider that when the SEPIC is maintained in the boundary condition, the time taken for the current to reach zero increases with voltage, so that switching frequency is at its minimum at the high voltage part of the AC cycle, where power is greatest. Lower switching frequency and greater power require larger filter components to suppress interference created by the switching at $Q_1$. According to the present approach, the SEPIC may be forced into continuous mode, drawing more current from the same ON time and resulting in increased power per supply cycle. To obtain a certain power level, and in comparison to the boundary condition control method, ON time can be reduced and switching frequency increased. The minimum frequency can be adjusted depending on power drawn from the supply unit to ensure that switching noise will be kept within the operation band of an EMC filter.

When the AC supply voltage is low, the SEPIC operates in discontinuous mode. In those parts of the AC supply cycle where voltage is higher, it operates in continuous mode.

As noted above, EMC filtering capacitors tend to shift the current waveform because they charge on the rising edge of the AC voltage supply waveform and discharge on its trailing edge. The approach described herein reduces this effect because the SEPIC is automatically driven harder on the falling edge.

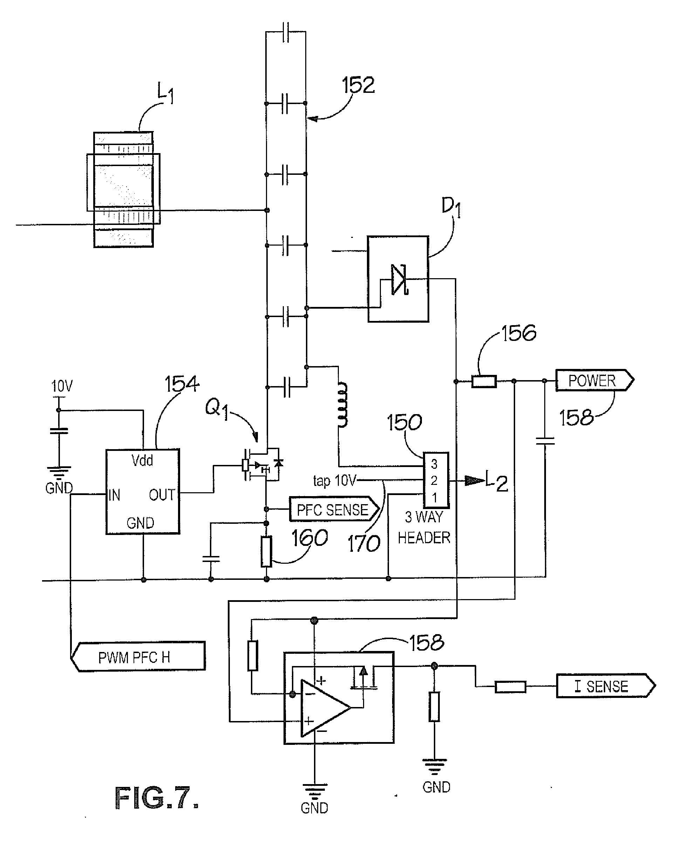

in the present embodiment, control of the SEPIC's switching element $Q_1$ is carried out by a programmed digital controller, more specifically a PIC. A practical SEPIC circuit with provision for providing the controller with the necessary inputs is shown in Figure 7. Comparing this drawing with the simple representation of a SEPIC in Figure 1, it can be seen that the inductor $L_1$ is present in Figure 8 although coupled inductor $L_2$ is omitted from the drawing. The second inductor is part of the circuit, however - 3-way header 150 has an output to $L_2$, as marked in the drawing. Capacitance $C_s$ is formed in Figure 7 by a bank of parallel-connected capacitors 152 connected to the diode $D_1$. Switching element $Q_1$ is formed as a field effect transistor and is controlled through a driver 154 which receives a logic signal from the PIC (not shown) and switches element $Q_1$ accordingly. A low value current sensing resistor 156 is connected in series between diode $D_1$ and the power supply output 158, so that voltage across resistor 156 represents diode/output current. This voltage is led to an operational amplifier 158 arranged to output a voltage modulated signal (I-sense) which is converted to a digital signal by an analogue to digital converter (ADVAL) and supplied to the controller. This current signal is used in the aforementioned manner to control initiation of each SEPIC switching cycle.

The circuit also senses current through the switching element $Q_1$. This is used in an alternative mode of operation in which the supply unit receives a DC supply input, as will be explained below. This current sensing function is carried out using a low value detector resistor 160 between the switching element $Q_1$ and ground, so that voltage on the side of the resistor remote from ground represents the relevant current and is supplied, via an ADVAL, to the controller.

In the present embodiment, the inductors $L_1$ and $L_2$ are wound on the same core in the manner of a transformer. Consequently power is delivered to the SEPIC output both when the switching element $Q_1$ is ON and when it is OFF, significantly reducing input noise.

Furthermore, in principle input noise is minimised if

$$K = L_s/L_p$$

Where K is the transformer's coupling factor, $L_s$ is the inductance of its secondary winding and $L_p$ is the inductance of its primary winding. In theory, fulfilling this equation causes all noise to be shifted to the SEPIC's output. Real transformers with a 1:1 ratio of windings are incapable of fulfilling the condition closely since their coupling factor is less than one due to fringing of the electromagnetic field. A transformer with, for example, a coupling factor of 0.95 and a winding ratio of 0.95 would solve the problem but the inventor was not able to find a suitable commercial unit. Instead, in the present embodiment, some of the secondary inductance $L_2$ is contributed by a trimming inductor - item 140 in Figure 7, also seen at $L_T$ in Figure 2 - formed separately from the transformer. In this way $L_s/L_p$ is increased and coupling is decreased, bring the two numbers closer and so reducing input noise.

Note that although the relevant connections are not shown in Figure 7, the controller additionally receives a signal representing supply voltage in order to calculate the aforementioned switching threshold.

There is a practical issue concerning provision of power to the digital controller and to other electronic elements of the supply unit such as the FET driver 154. These typically require a low DC voltage in order to operate. In Figure 7 the 3-way header 150 includes a connection 170 to a tap from the inductor $L_2$ (which is not itself shown in Figure 8). The tap provides an AC voltage lower than the voltage across the entire inductor $L_2$ and suitable, after rectification and smoothing, for driving the electronics. Hence once its operation is established the SEPIC provides the AC supply needed to run the electronics. However this creates a problem upon start-up since before its operation is established the SEPIC is incapable of providing this DC supply. A separate supply, also powered from the supply unit's input and not depicted herein, is used to drive the electronics upon start-up.

As noted above, the present embodiment of the invention is a power supply unit that can receive either a DC or an AC supply. That supply can also be over a range of different voltages. Operation of the SEPIC with a DC supply will now be considered. Upon initialisation the controller detects whether the supply is AC or DC. In the former case it selects the AC control mode explained above. In the latter, it selects the DC control mode to be explained below.

In DC control mode, control is based on the current through the switching element $Q_1$ sensed using detector resistor 160. The switching frequency of the element $Q_1$ is fixed but its ON times - and hence its duty cycle - are adjusted to limit current. Figure 8 illustrates this. Line 200 represents a pattern of switching which is programmed into the controller and which represents the maximum duty cycle (maximum ON-time) for the switching element. This pre-programmed pattern determines the switching frequency. Line 202 represents actual current variation. The controller constantly compares current 202 to a threshold current value 204 and turns the switching element $Q_1$ OFF when the current reaches the threshold value. Note that in this case switching is on the leading edge of the current waveform, not the trailing edge - that is, the threshold value is a maximum of current not a minimum as in the AC case.

As a result of this control mode the actual switching pattern 206 of $Q_1$ differs from the programmed version 200 in having a reduced - and variable - ON time 208. The controller measures average output power and varies the threshold current value 204 to provide a required power level. This is achieved using a feedback loop which compares measured and required powers and varies the threshold current value accordingly. A PID controller, implemented in software in the controller, is used.

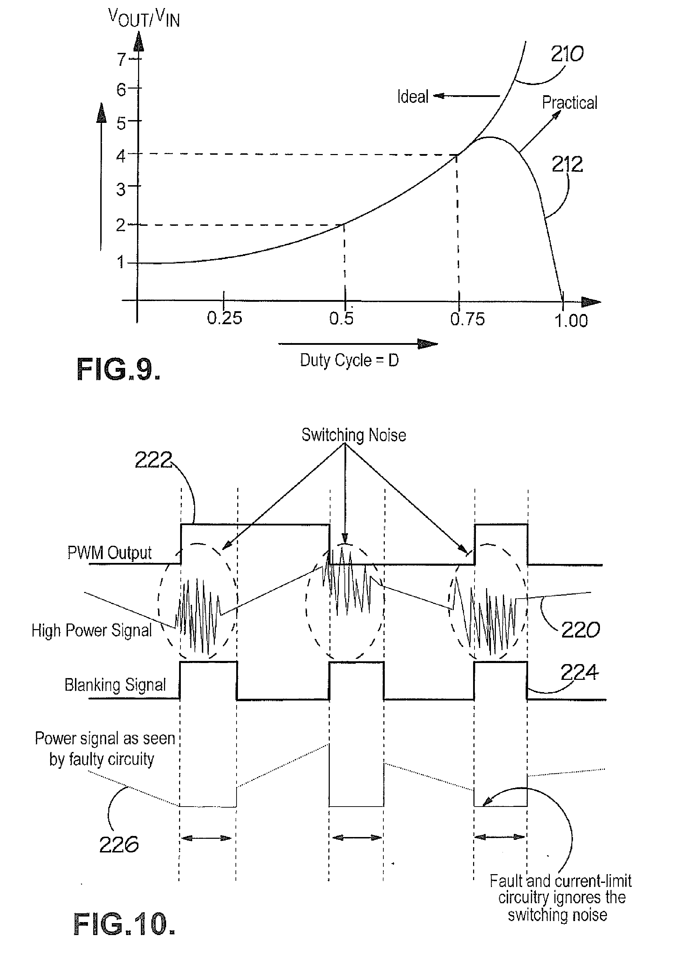

Variation of the boost level (output voltage divided by input voltage) with duty cycle is illustrated in Figure 9, where line 210 represents the theoretical performance of an idealised SEPIC and line 212 represents performance of a real SEPTIC. The programmed maximum duty cycle is approximately 75%, above which the SEPIC's performance starts to deteriorate as the graph shows. Such a high level of boost is not expected to be necessary in practice.

Noise created upon switching of the element $Q_1$ could potentially create false current readings, and to avoid this the controller is programmed to apply leading edge blanking, ignoring signals received within a predetermined interval after $Q_1$ is switched ON. Figure 10 shows the noisy current signal 220, the pulse width modulated signal 222 which drives controls the switching element $Q_1$, and a blanking signal 224, by virtue of which the controller receives the signal 226, omitting switching noise.

In DC control mode, the switching frequency is chosen to ensure that the SEPIC does not enter continuous mode which, as explained above, could cause runaway increase of current.

**Claims**

1. A method of controlling a switch in a switched mode power supply driven from an alternating current source and providing a controlled output, the method comprising

   (a) controlling a switching frequency by monitoring current in the switched mode power supply and initiating a new switching cycle each time the monitored current falls below a variable switching threshold;
   (b) turning the switch ON during each switching cycle for a chosen ON time;
   (c) setting the switching threshold based on the instantaneous supply voltage; and
   (d) monitoring power output from the switched mode power supply and varying the ON time to adjust the power output toward a required value.

2. A method as claimed in claim 1 in which the switching threshold is a function of instantaneous supply voltage.

3. A method as claimed in claim 1 or claim 2 in which the switching threshold is calculated by multiplying the instantaneous supply voltage by a predetermined number.

4. A method as claimed in any preceding claim in which ON time is adjusted in a feedback loop based on comparison of output power with a required power.

5. A switched mode power supply adapted to be driven from an alternating current source and to provide a controlled output, power supply comprising a switching element and a controller which controls switching of the switching element, causing it to switch at a switching frequency and a current sensor arranged to supply to the controller a signal representing current in the switched mode power supply, the controller being adapted to

   (a) control the switching frequency by initiating a new switching cycle each time the said current in the switched mode power supply falls below a variable switching threshold;
   (b) turn the switch ON during each switching cycle for an ON time determined by the controller;
   (c) set the switching threshold based on the instantaneous supply voltage; and
   (d) monitor power output from the switched mode power supply and varying the ON time to adjust the power output toward a required value.

6. A switched mode power supply as claimed in claim 5 in which the switched mode power supply comprises a first inductor in series with a supply output terminal and the switching element is connected in series with the first inductor.

7. A switched mode power supply as claimed in claim 6 which further comprises a second inductor connected across the switching element via a capacitance.

8. A switched mode power supply as claimed in claim 7 in which the first and second inductors are coupled.

9. A switched mode power supply as claimed in claim 8 in which the first and second inductors are wound on a common core.

10. A switched mode power supply as claimed in any of claims 5 to 9 which is a single ended primary inductor converter.

11. A switched mode power supply as claimed in any of claims 5 to 10 in which the controller calculates the switching threshold as a function or LUT of instantaneous supply voltage.

12. A switched mode power supply as claimed in any of claims 5 to 11 in which the controller adjusts ON time in a feedback loop based on comparison of output power with a required power.

13. A switched mode power supply as claimed in any of claims 5 to 12 which is further adapted to be driven from a DC source, the controller being adapted to choose between an AC and a DC operating mode and to control the switching element in the DC operating mode to provide a fixed switching frequency and a duty cycle which is variable to control current in the switched mode power supply.

14. A switched mode power supply as claimed in claim 13 in which, in the DC operating mode, ON time of the switching element during each switching cycle is controlled by turning the switching element OFF when the measured current exceeds a threshold current value.

15. A switched mode power supply as claimed in claim 13 or claim 14 in which the controller is adapted to adjust the threshold current value to cause the power supply to output a required power in DC operating mode.

FIG.1.

FIG.2.

FIG.3.

FIG.4a.

FIG.4b.

I

**FIG.5a.**

112

114

t

I

110    110

0

Switch
state

t    **FIG.5b.**

Period Value

Duty Cycle

204

202

0

Programmed Period

200

PWMxH/L    Programmed
Duty Cycle

Programmed
Duty Cycle

206

PWMxH/L    Actual
Duty Cycle
208

Actual
Duty Cycle
208

**FIG.8.**

FIG.6.

FIG.7.

$V_{OUT}/V_{IN}$

7
6
5
4
3
2
1

Ideal

Practical

210

212

0.25    0.5    0.75    1.00

Duty Cycle = D

## FIG.9.

Switching Noise

222

PWM Output

High Power Signal

220

Blanking Signal

224

Power signal as seen
by faulty circuity

226

Fault and current-limit
circuitry ignores the
switching noise

## FIG.10.